# EUROPEAN PATENT APPLICATION

(11) **EP 2 615 575 A1**
(43) Date of publication of application: **17.07.2013**
(21) Application number: 13150984.6
(22) Date of filing: 11.01.2013
(51) Int. Cl.: G06Q 30/06

(54) **Reverse auction system and method for matching between buyer and seller using space analysis**

(30) Priority: 13.01.2012 KR 20120004481
(71) Applicant: HYUNDAI MOTOR COMPANY, Seoul 137-938 (KR)
(72) Inventor: Park, Cheol Woo, 138-751 Seoul (KR); Kwon, Soon Sung, 431-904 Gyeonggi-do (KR)
(74) Representative: Isarpatent

(57) **Abstract**

Disclosed herein are a reverse auction system and a method for matching between a buyer and a seller using a space analysis. The buyers and the sellers that are physically close to each other are matched to each other using the space analysis for positions of the buyers and activity spaces of the sellers, thereby making it possible to satisfy needs of both of the buyers and the sellers.

## Description

### CROSS-REFERENCE TO RELATED APPLICATION

This application is based on and claims priority from Korean Patent Application No.10-2012-0004481, filed on January 13, 2012 in the Korean Intellectual Property Office, the disclosure of which is incorporated herein in its entirety by reference.

### BACKGROUND OF THE INVENTION

### Field of the invention

The present invention relates to a system and a method for providing a zone based reverse auction service, and more particularly, to a reverse auction system and method capable of satisfying needs of both of buyers and sellers by matching between the buyers and the sellers that are physically close to each other using a space analysis for positions of the buyers and activity spaces of the sellers.

### Description of the Prior Art

A buying and selling scheme of a product has been gradually improved. The most basic buying and selling scheme may be a scheme in which a buyer directly visits a store to buy his/her desired product. In this case, since a seller unilaterally suggests products, in order for the buyer to obtain a product appropriate for his/her desired condition, the buyer should visit many stores to collect information and select the product, which may cause much waste in view of a time and an effort.

Thus, a buying and selling scheme called an auction has newly appeared. The buying and selling scheme, which is a competition contract scheme, indicates a scheme of verbally performing the buying and selling. That is, when the seller suggests products, a plurality of buyers desiring to buy the products may be collected and buy the products according to their individual desired conditions through competition. In this process, a relatively short time may be required. However, since most of the numbers of sold products are restrictive, there is a problem that the buyers may miss a chance to buy the products.

In order to complement the above-mentioned problem, a reverse auction scheme in which roles of the sellers and the buyers are exchanged in a general auction scheme has been developed. In the reverse auction scheme, when the buyer suggests a condition for a product that he/she desires to buy, a plurality of sellers selling the corresponding product make a bid and the buyer makes a successful bid for the product appropriate for his/her desired condition. Except for the case in which a seller making a bid is not present, most of the buyers may buy their desired products appropriate for the condition and decrease a time and an effort required for buying their desired products. Currently, in accordance with the development of the Internet, the reverse auction as described above has been conducted through a reverse auction site accessible anytime and anywhere.

As one of the reverse auction methods as described above, a method for matching between a buyer and a seller positioned in a close zone based on zones of buyers and sellers has also been provided.

However, in the case of the reverse auction based on a region according to the related art, a seller and a buyer positioned in the same administrative area based on positions in administrative areas of sellers and buyers are matched to each other. Therefore, in the case in which an actual physical distance between the buyer and the seller is close, but the administrative areas of the buyer and the seller are different, a problem that the buyer and the seller positioned at a physically distant distance are matched to each other occurs.

Further, even though a seller having a large activity space (selling capability) is present in another administrative area adjacent to that of the buyer, in the case in which an activity space of a seller present in the same administrative area as that of the buyer is small, a problem that the buyer may not satisfactorily buy a required product occurs.

### SUMMARY OF THE INVENTION

Accordingly, the present invention has been made to solve the above-mentioned problems occurring in the prior art while advantages achieved by the prior art are maintained intact.

One subject to be achieved by the present invention is to provide a reverse auction system and method capable of satisfying needs of both of buyers and sellers by matching between the buyers and the sellers that are physically close to each other by improving a zone based reverse auction service method.

In one aspect of the present invention, there is provided a reverse auction system including: a communicating unit communicating with buyer terminals and seller terminals through a wired/wireless communication network; a space analyzing unit space-analyzing information on positions of group buyers and information on activity spaces of sellers received through the communicating unit to calculate a coverage of each seller for the group buyers and selecting a seller target using the calculated coverage; and a controlling unit interworking with the buyer terminals and the seller terminals through the communicating unit to provide information input from the buyer terminals to the seller terminals and provide information input from the seller terminals to the buyer terminals.

The controlling unit may transmit buying information to the seller terminal of the seller target selected by the space analyzing unit and transmit selling information suggested by the seller target to the buyer terminals when it receives the selling information from the seller terminal. In this case, the controlling unit may transmit the buying information to the seller terminal and then change an activity space of a corresponding seller according to a request of the seller terminal.

The space analyzing unit may compare the information on the positions of the group buyers with the activity spaces to calculate a ratio of the buyers of which positions are included in the activity spaces among the group buyers as the coverage.

The space analyzing unit may select a seller of the corresponding coverage as the seller target in the case in which the calculated coverage satisfies a preset coverage condition.

The controlling unit may also transmit information on the coverage of the seller target to the buyer terminals at the time of transmitting the selling price suggested by the seller target to the buyer terminals.

The controlling unit may transmit information on accurate positions of the buyers to the corresponding sellers when information on finally selected sellers is received from the buyer terminals.

In another aspect of the present invention, there is provided a reverse auction method including: a first step of comparing information on positions of group buyers with activity spaces of sellers to calculate a coverage of each seller; and a second step of comparing the coverage of each seller with a coverage condition preset by the group buyers to select a seller target.

The reverse auction method may further include, after the selecting of the seller target, a third step of transmitting buying information to a seller terminal of the seller target and transmitting selling information to buyer terminals at the time of receiving the selling information from the seller terminal of the seller target receiving the buying information; and a fourth step of transmitting the information on the positions of the buyers to the seller terminal of the selected seller target at the time of receiving selection information from the buying terminals. Here, the selling information may include information on a selling price suggested by the seller target.

In the first step, the information on the positions and the activity spaces may be compared with each other, such that a ratio of the buyers of which positions are included in the activity spaces among the group buyers is calculated.

The buying information may include at least one of a buying amount demanded by the group buyers, a buying desired price, requirements of the group buyers, and information on distances between the seller target and the group buyers.

The buying information may further include information on the number of buyers that are included in the activity space of the seller target among the group buyers, a buying amount by the buyers that are included in the activity space, the number of buyers that are not included in the activity space, and a buying amount by the buyers that are not included in the activity space.

In the third step, information on a coverage of the seller target may also be transmitted to the buyer terminals at the time of transmitting the selling price to the buyer terminals.

The reverse auction method may further include, after the transmitting of the buying information to the seller terminal of the seller target in the third step, changing the activity space according to a request of the seller terminal of the seller target.

### BRIEF DESCRIPTION OF THE DRAWINGS

The above and other objects, features and advantages of the present invention will be more apparent from the following detailed description taken in conjunction with the accompanying drawings, in which:
FIG. 1 is a configuration diagram showing a configuration of the entire system for providing a reverse auction service according to an exemplary embodiment of the present invention;
FIG. 2 is a configuration diagram showing a configuration of a matching server of FIG. 1 in more detail;
FIG. 3 is a flow chart for describing a reverse auction method using a method for matching between a buyer and a seller using a space analysis according to the exemplary embodiment of the present invention; and
FIG. 4 is a diagram showing a activity space according to the exemplary embodiment of the present invention.

### DETAILED DESCRIPTION OF THE PREFERRED EMBODIMENTS

Hereinafter, exemplary embodiments of the present invention will be described in detail with reference to the accompanying drawings.

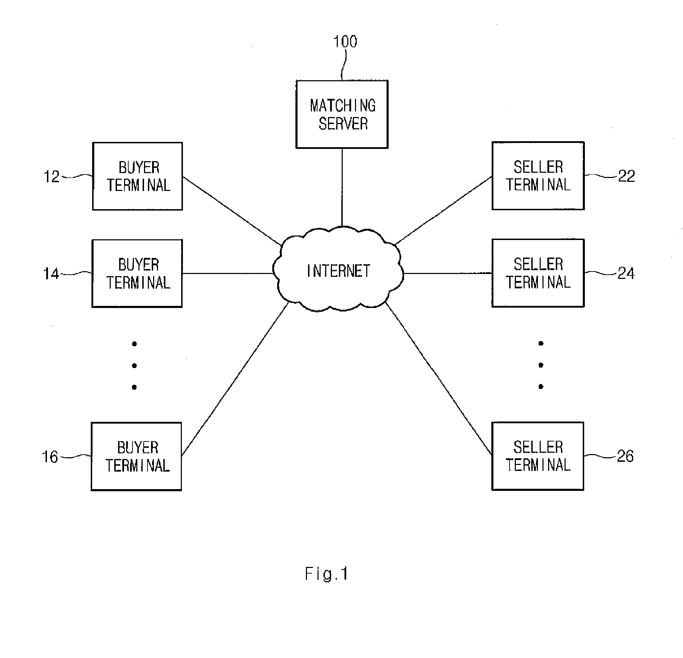

FIG. 1 is a configuration diagram showing a configuration of the entire system for providing a reverse auction service according to an exemplary embodiment of the present invention.

The entire system of FIG. 1 is configured to include a plurality of buyer terminals 12 to 16, a plurality of seller terminals 22 to 26, and a matching server 100.

The buyer terminals 12 to 16, which are terminals used by buyers in order to participate in a reverse auction through the Internet (a wired/wireless communication network), include both of a wired terminal such as a personal computer, or the like, and a wireless terminal such as a tablet PC or a smart phone. The buyers may be individuals or groups and participate in a reverse auction using the buyer terminals 12 to 16 to input buying information (a buying product, a buying amount, a desired price, and the like) and inquire information provided by a seller. Information on positions of the buyers may be input in advance at the time of subscribing to the reverse auction service or be input together with the buying information at the time of inputting the buying information.

The seller terminals 22 to 26, which are terminals used by sellers in order to participate in the reverse auction through the Internet network, include both of a wired terminal such as a personal computer, or the like, and a wireless terminal such as a tablet PC or a smart phone. The sellers may participate in the reverse auction using the seller terminals 22 to 26 to set their activity spaces and inquire the buying information, information on a position of the buyer deciding the buying, and the like. The setting of the activity spaces may allow the sellers to select one unit zone divided in advance in the matching server 100 or a plurality of unit zones divided in advance in the matching server 100 or allow the sellers to draw and select a region (space) in which they are to sell products on a map.

The matching server 100 communicates with the buyer terminals 12 to 16 and the seller terminals 22 to 26 to receive information required for the reverse auction from the buyers and the sellers and match between the buyers and the sellers, and allows the buyers and the sellers to inquire (confirm) the information required to perform the reverse auction. Particularly, the matching server 100 spatially analyzes the information on the positions of the buyers input by the buyers through the buyer terminals 12 to 16 and the information on the activity spaces input by the sellers through the seller terminals 22 to 26 to match between the buyers and the sellers. That is, the matching server 100 confirms coverages of each seller capable of covering the buyers based on the positions of the buyers and provides the buying information including a requirement of the buyer to a seller having the coverage corresponding to a level preset by the buyer. In addition, the matching server 100 provides a selling price suggested by the seller to the buyer in the case in which the seller accepts a demand of the buyer and provide the information on the position of the buyer when the buyer accepts the selling price, thereby allowing a product to be sent. A function of the matching server 100 as described above will be described below in more detail.

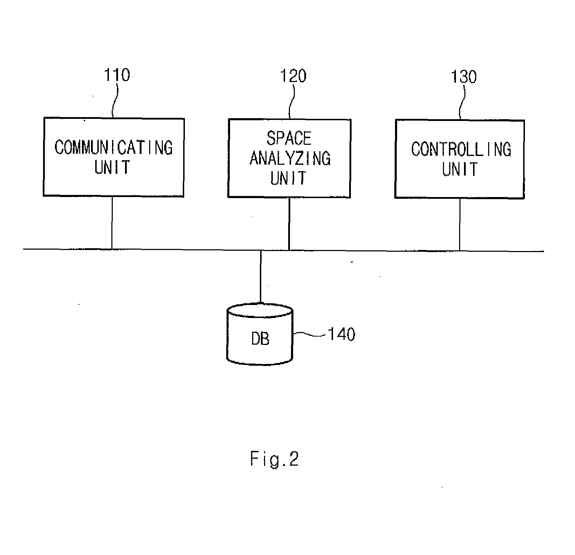

FIG. 2 is a configuration diagram showing a configuration of a matching server 100 of FIG. 1 in more detail.

The matching server 100 is configured to include a communicating unit 110, a space analyzing unit 120, a controlling unit 130, and a database 140.

The communicating unit 110 performs data communication with the buyer terminals 12 to 16 and the seller terminals 22 to 26 through the Internet according to a predefined communication protocol. The communicating unit 100 stores information received through the data communication with the buyer terminals 12 to 16 and the seller terminals 22 to 26 in the database 140 and transmits information stored in the database 140 to the buyer terminals 12 to 16 and the seller terminals 22 to 26.

The space analyzing unit 120 searches the information on the positions of the buyers participating in the reverse auction and the information on the activity spaces of the sellers from the database 140, space-analyzes the information, and selects a seller target using the analysis result. That is, the space analyzing unit 120 confirms how many buyers are included in a corresponding activity space for each activity space of each seller and finds sellers of which a ratio (coverage) of the buyers included in the corresponding activity space satisfies a level (for example, 60%) preset by the buyer to select the sellers as seller targets.

The controlling unit 130 operates the Internet site (a user interface screen) for the reverse auction service and generally controls an operation of the matching server 100. The controlling unit 130 transmits information required for operating the reverse auction service to the buyer terminals 12 to 16 and the seller terminals 22 to 26 accessing the Internet site through the Internet to allow the buyers and the sellers to confirm the information. Particularly, the controlling unit 130 transfers the buying information (information including requirements of the buyers) to the seller terminals, for example, 22 and 24, of the seller targets selected by the space analyzing unit 120 when the seller targets are selected and transmits price information suggested by the seller targets accepting the demand to the buyer terminals 12 to 16. In addition, the controlling unit 130 searches the information on the positions of the corresponding buyers from the database 140 when any one of the prices suggested by the seller targets is selected by the buyers and transmits the searched information to the seller terminal, for example, 22, of the corresponding seller target. In addition, the controlling unit 130 allows the information on the activity spaces of the sellers to be changed according to a request of the seller terminals 22 to 26 even during progress of the auction.

The database 140 stores data required for an operation of the matching server 100. Particularly, the database 140 stores subscriber information (the information on the positions of the buyers and the information on the activity spaces of the sellers) and buying information (a product to be bought, a buying amount, a buying desired price, a coverage condition of the seller, other requirements, and the like) therein.

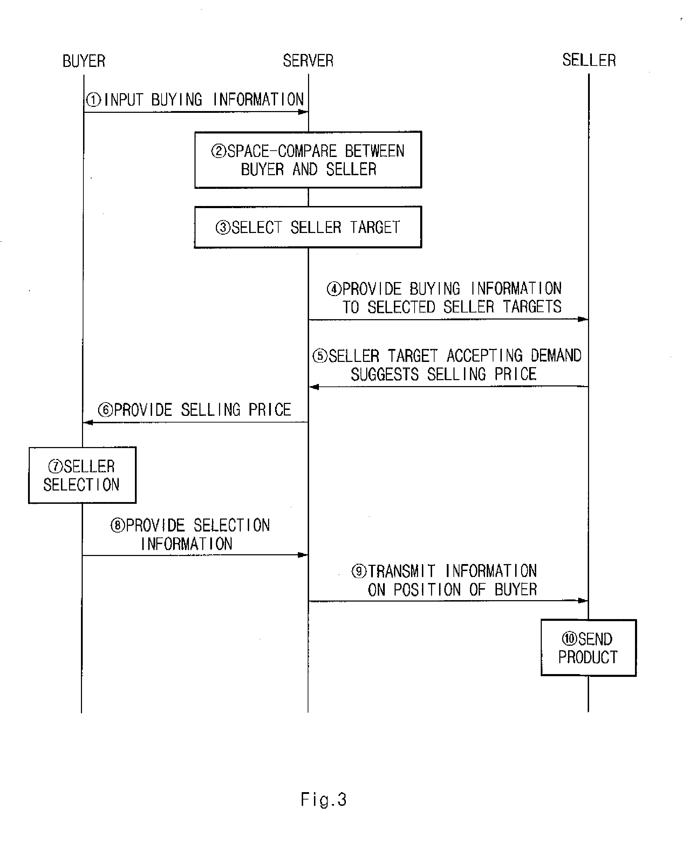

FIG. 3 is a flow chart for describing a reverse auction method using a method for matching between a buyer and a seller using a space analysis according to the exemplary embodiment of the present invention.

Hereinafter, for convenience of explanation, main characteristic contents of the present invention will be mainly described. Since other processes may be the same as or similar to the reverse auction or auction process according to the related art, a description thereof will be omitted.

First, the buyers and the sellers that are to use the reverse auction service using the method for matching between a buyer and a seller according to the exemplary embodiment of the present invention access the Internet site operated by the matching server 100 and subscribe to the Internet site.

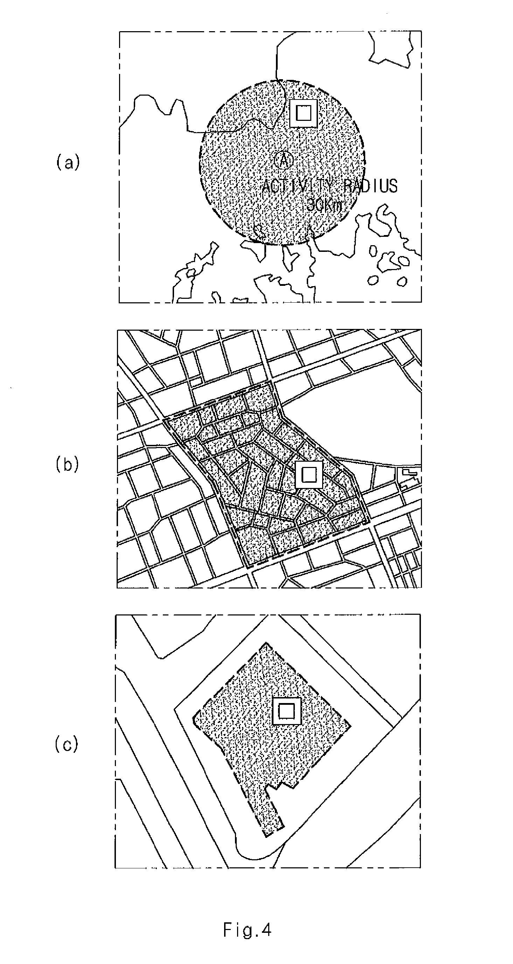

At the time of subscribing to the Internet site, the buyers input subscriber information including their addresses (information on positions), and the sellers input information on products sold by them and set activity spaces. In this case, the activity space may be set by setting a predetermined radius based on a specific point (a position of the seller) as the activity space as shown in FIG. 4A, marking a seller's desired zone on a map as shown in FIG. 4B, or allowing the seller to select one unit zone (a specific building, a specific zone such as a ski resort or an amusement park, or the like) divided in advance or a plurality of unit zones divided in advance as shown in FIG. 4C. The activity space as described above may be changed anytime by a seller logging in the Internet site.

The buyers subscribing to the Internet site log in a reverse auction site of the matching server 100 using the buyer terminals 12 to 26 and then input buying information on product that they are to buy (①).

Here, the buying information may include a product to be bought, a buying amount, a buying desired price, a coverage condition of the seller, other requirements, and the like. The coverage is a numeral value (percentage) indicating how many the activity space set by the seller includes positions of group buying participants in the case in which the buyers are a group, for example, in the case in which a plurality of buyers are to perform group buying. That is, in the case in which the coverage is 100%, it means that all of the positions of the buyers are included in the activity space of the corresponding seller, and in the case in which the coverage is 50%, a half of the positions of the group buyers are included in the activity space of the corresponding seller.

In the present invention, in the case in which the buyers are the group, it means that the buyers are the group buyers. In this case, amounts of products that each buyer is to buy may be the same as each other or different from each other.

When the buyers input the buying information, the communicating unit 110 stores the input buying information in the database 140.

When the input of the buying information is completed, the space analyzing unit 120 searches the sellers of the buying products from the database and then performs space comparison for comparing the activity spaces of the corresponding sellers with the positions of the buyers (②).

That is, the space analyzing unit 120 analyzes how many the positions of the buyers are included in each activity space of each participant to calculate the coverage of each seller. As a calculation result, for example, it is assumed that a coverage of a seller A using the seller terminal 22 is 100%, a coverage of a seller B using the seller terminal 24 is 80%, and a coverage of a seller C using the seller terminal 26 is 50%.

When the calculation is completed, the space analyzing unit 120 finds the sellers satisfying the coverage condition set by the buyer and selects the sellers as the seller targets (③).

For example, when the buyer inputs the coverage condition of 60% at the time of inputting the buying information, the space analyzing unit 120 selects the seller A and the seller B having the coverage of 60% or more as the seller targets.

When the selection of the seller targets is completed, the controlling unit 130 provides the buying information of the buyer to the seller terminals 22 and 24 of the selected seller targets (④).

That is, the controlling unit 130 provides the information on a total buying amount demanded by the buyers, a buying desired price, other requirements of the buyers, a distance (for example, the longest distance) between the corresponding seller and the buyers, and the like, without publishing accurate positions of the buyers. The buying information as described above may include information on the number of buyers that are included in the activity space of the corresponding seller among the buyers, a buying amount by the buyers that are included in the activity space, the number of buyers that are not included in the activity space, a buying amount by the buyers that are not included in the activity space, and the like.

The seller A and the seller B receiving the buying information judge whether or not they accept the demands of the buyers and input selling prices to be suggested by them through the seller terminals 22 and 24 in the case in which they are to accept the demands (⑤) .

In this case, the seller A or the seller B may change, for example, expand his/her activity space. That is, since one of the factors considered when the buyer selects the seller may be the information on the coverage of the seller in a step ⑦ to be described below, the seller may expand his/her activity space to increase the possibility that he/she will be selected.

The controlling unit 130 provides the selling prices suggested by the seller A and the seller B to the buyer terminals 12 to 16 (⑥).

In this case, the controlling unit 130 may provide the information on the coverages of the seller A and the seller B as well as the suggested selling prices. That is, even though the selling price is low, in the case in which the coverage of the seller is low, the possibility that the product will not be supplied in time is present. Therefore, the information on the coverage of the seller may be provided together with the selling price so as to consider the above-mentioned point.

When the buyer reviews the selling prices of the seller A and the seller B and the information on the coverages of the seller A and the seller B and then selects any one of the seller A and the seller B (⑦), information on the selected seller is transmitted to the controlling unit 130 (⑧).

The controlling unit 130 transmits information on a buying amount of each buyer together with information on accurate positions of the buyers stored in the database 140 to the seller terminal 22 of the finally selected seller (⑨), and the corresponding seller may sends the products to each buyer using the above-mentioned information (⑩).

According to the present invention, the buyers and the sellers that are physically close to each other are matched to each other using the space analysis for positions of the buyers and activity spaces of the sellers, thereby making it possible to satisfy needs of both of the buyers and the sellers.

The exemplary embodiments of the present invention described above have been provided for illustrative purposes. Therefore, those skilled in the art will appreciate that various modifications, alterations, substitutions, and additions are possible without departing from the scope and spirit of the invention as disclosed in the accompanying claims and such modifications, alterations, substitutions, and additions fall within the scope of the present invention.

### SYMBOL OF EACH OF THE ELEMENTS IN THE FIGURES

12 ∼ 16: BUYER TERMINAL
22 ∼ 26: SELLER TERMINAL
100: MATCHING SERVER
110: COMMUNICATING UNIT
120: SPACE ANALYZING UNIT
130: CONTROLLING UNIT

## Claims

1. A reverse auction system comprising:
a communicating unit communicating with buyer terminals and seller terminals through a wired/wireless communication network;
a space analyzing unit space-analyzing information on positions of group buyers and information on activity spaces of sellers received through the communicating unit to calculate a coverage of each seller for the group buyers and selecting a seller target using the calculated coverage; and
a controlling unit interworking with the buyer terminals and the seller terminals through the communicating unit to provide information input from the buyer terminals to the seller terminals and provide information input from the seller terminals to the buyer terminals.

2. The reverse auction system according to claim 1, wherein the controlling unit transmits buying information to the seller terminal of the seller target selected by the space analyzing unit and transmits a selling price suggested by the seller target to the buyer terminals when it receives the selling price from the seller terminal.

3. The reverse auction system according to claim 1, wherein the controlling unit changes an activity space of a corresponding seller according to a request of the seller terminal.

4. The reverse auction system according to claim 1, wherein the space analyzing unit compares the information on the positions of the group buyers with the activity spaces to calculate a ratio of the buyers of which positions are included in the activity spaces among the group buyers as the coverage.

5. The reverse auction system according to claim 1, wherein the space analyzing unit selects a seller of the corresponding coverage as the seller target in the case in which the calculated coverage satisfies a preset coverage condition.

6. The reverse auction system according to claim 1, wherein the controlling unit also transmits information on the coverage of the seller target to the buyer terminals at the time of transmitting the selling price suggested by the seller target to the buyer terminals.

7. The reverse auction system according to claim 1, wherein the controlling unit transmits information on accurate positions of the buyers to the corresponding sellers when information on finally selected sellers is received from the buyer terminals.

8. A reverse auction method comprising:
a first step of comparing, by a space analyzing unit of a reverse auction system, information on positions of group buyers with activity spaces of sellers to calculate a coverage of each seller for the group buyers; and
a second step of comparing, by the space analyzing unit, the coverage of each seller with a preset coverage condition to select a seller target.

9. The reverse auction method according to claim 8, further comprising, after the selecting of the seller target,
a third step of transmitting, by a controlling unit of the reverse auction system, buying information to a seller terminal of the seller target, and transmitting selling information to buyer terminals at the time of receiving the selling information from the seller terminal of the seller target receiving the buying information; and
a fourth step of transmitting, by the controlling unit, the information on the positions of the buyers to the seller terminal of the selected seller target at the time of receiving selection information from the buying terminals.

10. The reverse auction method according to claim 8 or 9, wherein in the first step, the information on the positions and the activity spaces are compared with each other, such that a ratio of the buyers of which positions are included in the activity spaces among the group buyers is calculated for each seller.

11. The reverse auction method according to claim 8 or 9, wherein the buying information includes at least one of a buying amount demanded by the group buyers, a buying desired price, requirements of the group buyers, and information on distances between the seller target and the group buyers

12. The reverse auction method according to claim 11, wherein the buying information further includes information on the number of buyers that are included in the activity space of the seller target among the group buyers, a buying amount by the buyers that are included in the activity space, the number of buyers that are not included in the activity space, and a buying amount by the buyers that are not included in the activity space.

13. The reverse auction method according to claim 9, wherein the selling information includes information on a selling price suggested by the seller target.

14. The reverse auction method according to claim 13, wherein in the third step, information on a coverage of the seller target is also transmitted to the buyer terminals at the time of transmitting the selling price to the buyer terminals.

15. The reverse auction method according to claim 9, further comprising, after the transmitting of the buying information to the seller terminal of the seller target in the third step, changing the activity space according to a request of the seller terminal of the seller target.

16. The reverse auction method according to claim 8, wherein the activity spaces are set by selectively setting regions in which each seller is to sell products.

17. The reverse auction method according to claim 16, wherein the activity spaces are set by allowing the sellers to select a predefined unit zone or draw their desired regions on a map.

18. The reverse auction method according to claim 16, wherein the activity spaces are changeable according to a request of each seller.

19. The reverse auction system according to claim 1, wherein the activity spaces are set by selectively setting regions in which each seller is to sell products.
